**Europäisches Patentamt**

**European Patent Office**

**Office européen des brevets**

(19)

(11) Numéro de publication: **0 219 158**
**B1**

(12) **FASCICULE DE BREVET EUROPEEN**

(45) Date de publication du fascicule du brevet:
**29.11.89**

(51) Int. Cl.⁴: **G 05 F 1/575**

(21) Numéro de dépôt: **86201688.8**

(22) Date de dépôt: **30.09.86**

(54) **Circuit régulateur de tension.**

(30) Priorité: **08.10.85 FR 8514861**

(43) Date de publication de la demande:
**22.04.87 Bulletin 87/17**

(45) Mention de la délivrance du brevet:
**29.11.89 Bulletin 89/48**

(84) Etats contractants désignés:
**DE FR GB IT**

(56) Documents cités:
**DE-A- 2 003 654**
**FR-A- 1 318 868**

(73) Titulaire: **LA RADIOTECHNIQUE PORTENSEIGNE,
51, Rue Carnot, F-92150 Suresnes (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB IT**

(72) Inventeur: **Moreau, Alain, Société Civile S.P.I.D. 209 rue
de l'Université, F-75007 Paris (FR)**

(74) Mandataire: **Caron, Jean et al, SOCIETE CIVILE
S.P.I.D. 209, rue de l'Université, F-75007 Paris (FR)**

## Description

La présente invention concerne un circuit régulateur de tension réalisable au moyen de transistors d'une seule polarité et de résistances, comprenant:

une source de tension de référence plus faible que la tension à fournir, connectée à une borne commune,

un élément ballast qui est inséré entre une borne d'entrée et une borne de sortie, cet élément étant commandé par un premier circuit de comparaison entre la tension de référence et une tension qui est fonction de la tension sur la borne de sortie.

Un tel circuit est connu du livre «Emploi rationnel des circuits intégrés» de J.P. Oehmichen, pages 461 et 469. Une source de tension faible et de grande stabilité est procurée notamment par un montage connu constitué exclusivement de transistors et de résistances, désigné généralement par le vocable en langue anglaise: «band-gap reference». Ce montage est habituellement conçu pour délivrer une tension de 1,26 volt, tension pour laquelle son coefficient de température est nul.

Des modes de réalisation d'une telle source sont décrits dans le livre «Analysis & Design of analog integrated circuits» de Gray & Meyer chez Wiley & Sons, pages 258-261. Lorsqu'on désire obtenir une tension régulée de plusieurs volts, il entre dans les compétences normales de l'homme du métier de compléter le circuit par un pont diviseur connecté à la sortie de la tension régulée de plusieurs volts, afin d'obtenir une tension divisée de 1,262 volt que l'on peut alors comparer à la tension de référence au moyen d'un circuit différentiel pour réguler la tension de sortie. Toutefois un tel diviseur de rapport 1/n divise aussi la tension d'erreur par n, et diminue d'autant le degré de régulation.

L'invention se propose de fournir un circuit régulateur de tension dans lequel les variations de la tension de sortie sont directement comparées à la tension de référence et dont la stabilité est donc du même ordre que celle de la référence, circuit qui n'utilise pas de diode zener, et est réalisé à partir de transistors et de résistances exclusivement, les transistors étant en outre tous de même polarité, par exemple dans une technologie de circuit intégré à isolation par oxyde.

Un tel régulateur de tension réalisable en circuit intégré est utile par exemple pour alimenter des oscillateurs à grande stabilité de fréquence, notamment ceux utilisés dans les magnétoscopes avec les modulateurs sur porteuse haute fréquence de signal vidéo.

Selon l'invention, un tel circuit régulateur de tension est notamment remarquable en ce qu'il comporte en outre un pont de résistances disposé entre la source de tension de référence et la borne commune et un circuit différentiel dont un premier transistor a sa base reliée à une extrémité d'une des résistances dudit pont et son émetteur relié à une source de courant, et dont un deuxième transistor a sa base reliée à l'autre extrémité de la susdite résistance dudit pont et son émetteur relié par une résistance à celui du premier transistor, et en ce que le collecteur du deuxième transistor est relié par une résistance à la borne de sortie et fournit la susdite tension qui dépend de la tension sur la borne de sortie. On entend par «circuit différentiel» un montage de deux transistors NPN dont les émetteurs sont reliés ensemble, soit directement soit via une résistance, et auxquels une source de courant, par exemple reliée à la masse, fournit un courant qui est partagé entre les deux transistors.

En outre, le premier circuit de comparaison n'est pas un véritable amplificateur opérationnel, du fait qu'on désire le réaliser avec des transistors d'une seule polarité, et il a donc des performances limitées; de ce fait la régulation n'est pas parfaite lorsque la tension d'entrée varie. Pour éliminer cet inconvénient la source de tension selon l'invention est notamment remarquable en ce qu'elle comporte un deuxième circuit de comparaison entre une fraction de la tension d'entrée et la tension de référence, ce deuxième circuit de comparaison fournissant à l'élément ballast un courant qui est fonction de la tension sur la borne d'entrée.

En outre le collecteur du premier transistor du susdit circuit différentiel est avantageusement relié au deuxième circuit de comparaison pour l'alimenter en courant constant.

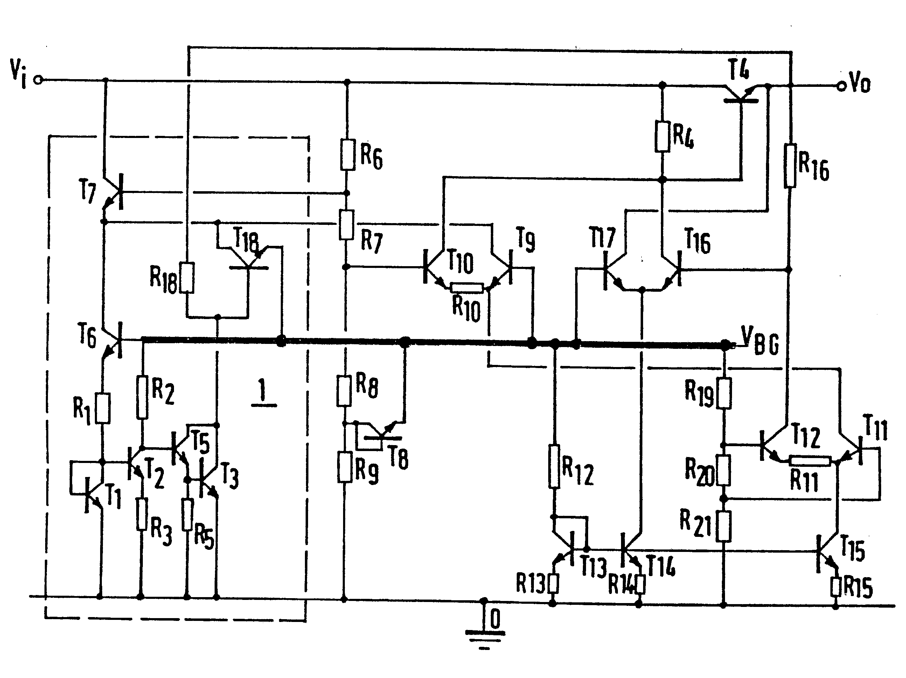

D'autres explications indiquant comment les dispositions remarquables décrites ci-dessus procurent des avantages, ou éliminent les inconvénients des circuits de l'art antérieur, seront données plus loin à l'occasion de la description détaillée, qui va suivre maintenant, d'un exemple préféré de réalisation pratique du circuit selon l'invention, qui est représenté sur la figure unique.

Le circuit représenté comporte une structure de base connue constituée par une source de tension de référence 1, du type dit «band-gap reference» dans le langage habituel du métier. Elle est connectée à une borne commune 0, prise comme référence de potentiel nul, dite masse. Elle est constituée essentiellement par quatre transistors T1, T2, T3, T18 tous de type NPN associés à quatre résistances R1, R2, R3, R18.

Le transistor T1, est monté en diode dont la cathode est reliée à la masse, et l'anode alimentée via la résistance R1. La tension d'anode est appliquée à la base de T2, dont l'émetteur est relié à la masse via R3 et le collecteur est alimenté via R2. Le collecteur de T2 est relié à la base de T3.

Le collecteur de T3 est alimenté par une source de courant. Comme il n'est pas facile de réaliser une telle source, de la polarité requise, sans transistors PNP, elle est simplement constituée par une résistance R18 reliée à une source de tension. Cette résistance fournit en outre du courant à la base du transistor T18, dont le collecteur est relié à une source de tension et dont l'émetteur fournit du courant aux résistances R1 et R2. Puisque la simple résistance R18 n'est pas une source de courant constant, le courant est susceptible de varier dans T3, et par suite le courant de base de T3 peut varier aussi, ce qui déstabiliserait la source de référence.

Pour diminuer cet effet, on réduit le courant de base en utilisant pour constituer le transistor T3 un montage Darlington T5, T3, dont le transistor T3 est le transistor de sortie.

Ceci introduit un décalage de tension base-émet-

teur supplémentaire. Pour le compenser, on utilise un transistor T6 dont la jonction base-émetteur est introduite en série avec R1.

La tension de référence d'environ 2,65 volts est fournie au point commun de l'émetteur de T18 et de la résistance R2, alimentant une connexion à la tension de référence, qui est soulignée sur la figure par un trait plus épais. Cette tension est plus élevée que la tension de 1,62 volt mentionnée plus haut, du fait de la présence des transistors T5 et T6.

On souhaite obtenir une tension bien supérieure à la tension de 2,65 volts fournie par la référence. A cet effet, on utilise un transistor T4 dont le collecteur est connecté à une borne de tension d'entrée Vi, dont la base est reliée par une résistance R4 à Vi, et dont l'émetteur est connecté à une borne de sortie Vo. Ce transistor constitue un élément ballast qui est inséré entre la borne d'entrée Vi et la borne de sortie Vo. Cet élément ballast est commandé par un circuit différentiel T16, T17. Le premier transistor T16 a sa base reliée par une résistance R16 à ladite borne de sortie Vo. Le deuxième transistor T17 a sa base reliée à la tension de référence. Ce circuit différentiel réalise une comparaison de deux tensions, à savoir la tension de référence d'une part, et la tension au point commun R16/base de T16 d'autre part, tension qui est fonction de la tension de sortie sur Vo.

Habituellement ce point commun est lui-même réuni à la masse par une résistance qui, avec R16, forme un pont diviseur. Le collecteur du premier transistor T16 est relié à la base du transistor ballast T4, ce qui réalise la commande de ce dernier. Ainsi lorsque la tension de sortie sur Vo tend à augmenter, le courant augmente dans le transistor T16, et par suite dans la résistance R4, connectée à la base de T4, ce qui abaisse la tension sur la base de T4, et fait redescendre la tension de sortie. Néanmoins, comme on l'a indiqué plus haut, ce circuit a l'inconvénient de fournir, pour la comparaison avec la référence, une tension d'erreur divisée dans le rapport de division du pont diviseur. L'idéal serait de disposer, à la place de R16, d'un élément produisant une chute de tension fixe. On pourrait songer à utiliser une diode zener. Malheureusement un tel élément, d'une part n'est stable que pour une certaine valeur de ladite chute de tension fixe, ce qui impose la tension de sortie, et surtout n'est pas toujours réalisable dans les technologies de circuits intégrés.

L'invention procure l'équivalent d'une diode zener parfaite, et ceci pour n'importe quelle valeur de tension désirée, aux bornes de R16. A cet effet, un pont de trois résistances R19, R20, R21 est disposé dans cet ordre entre la connexion de tension de référence et la masse, et un circuit différentiel T11, T12 est utilisé, dont le premier transistor T11 a sa base reliée à l'extrémité inférieure de la résistance R20 et son émetteur relié à une source de courant T15, et dont le deuxième transistor T12 a sa base reliée à l'autre extrémité, supérieure, de la résistance R20, et son émetteur relié par une résistance R11 à celui de T11. Enfin, le collecteur du deuxième transistor T12 est relié à la borne de sortie Vo par la résistance 16 et fournit ainsi à la base de T16 la susdite tension qui dépend de la tension sur la borne de sortie.

Le circuit fonctionne de la manière suivante: une fraction de la tension de référence est présente aux bornes de la résistance R20. Le potentiel du point haut de cette résistance R20 est transmis avec un décalage, dû à la tension base-émetteur de T12, à l'extrémité gauche de R11, et le potentiel du point bas de R20, via la jonction base-émetteur de T11 est transmis avec le même décalage à l'autre extrémité de R11. Du fait que les deux tensions base-émetteur sont égales, la tension de R20 se retrouve exactement aux bornes de R11. Les deux transistors T11 et T12 sont dimensionnés de façon à avoir la même tension base-émetteur. De même le pont R19, R20, R21 est calculé pour que l'échauffement par effet Joule y soit identique dans les 3 résistances. Le courant qui passe dans R11 passe aussi dans R16, sauf la fraction de ce courant qui s'écoule dans les bases de T12 et T16. Ces deux courants sont faibles si le gain des transistors est grand, et de plus ils sont de sens opposé et le circuit peut être dimensionné pour qu'ils soient égaux et s'annulent. En fin de compte, la tension aux bornes de R16 est égale à R16/R11 (ici les références R16 et R11 indiquent les valeurs ohmiques des résistances) fois la tension aux bornes de R20, qui est elle-même une fraction de la tension de référence. Toutes les résistances doivent être réalisées avec des largeurs de diffusion égales, pour avoir exactement le même coefficient de température. Dès lors la tension aux bornes de R16 peut reproduire quasi-parfaitement un multiple de la tension de référence, c'est-à-dire qu'elle procure l'équivalent d'une diode zener parfaite, dont la valeur peut être choisie aisément, et indépendante de la température.

La tension sur la base de T16 suit donc parfaitement les variations de tension sur la borne Vo, mais il reste une source d'erreur, parceque lorsque la tension d'entrée varie, le courant dans R4 et dans le collecteur de T16 varie aussi, et donc la tension base-émetteur de T16 varie et fausse la comparaison avec la tension de référence appliquée à la base de T17. Pour diminuer grandement cet effet, un deuxième pont de résistances R6 à R9 est placé entre la borne de tension d'entrée Vi et la masse. Un point à potentiel intermédiaire, ici le point commun des résistances R7 et R8, est appliqué à la base d'un transistor T10 formant circuit différentiel avec un autre transistor T9, qui a sa base reliée à la connexion de tension de référence. L'émetteur de T9 est relié directement à une source de courant, et l'émetteur de T10 est relié à celui de T9 par une résistance R10. Le collecteur de T10 est connecté à la base de T4 et donc aussi relié à la borne d'entrée via la résistance R4.

Ce circuit fonctionne de la façon suivante: lorsque la tension d'entrée, par exemple, augmente, le pont diviseur transmet aussi l'augmentation de tension d'entrée à T10 dont le courant collecteur augmente. Le collecteur de T10 transmet donc l'augmentation de courant dans R4 et empêche ainsi que celle-ci ne soit répercutée sur le courant de T16. Il est facile à l'homme du métier de calculer, en négligeant les courants de base des transistors, et en supposant constantes les tensions base-émetteur, que le rapport de division du pont R6-R9 doit être sensiblement égal à V10/V4, où V10 et V4 sont les tensions aux bornes de R10 et R4, respectivement. Alors les variations de courant dans R4, dûes aux variations de tension sur Vi, sont compensées par le courant absorbé dans le collecteur de T10 (aux approximations près).

Le circuit T9, T10 constitue donc un deuxième circuit de comparaison, entre une fraction de la tension d'entrée sur la borne Vi et la tension de référence sur la connexion de tension de référence, ce circuit de comparaison fournissant à l'élément ballast, plus précisément à l'ensemble R4/base de T4, un courant qui est fonction de la tension sur la borne d'entrée.

Puisque le collecteur de T11 du circuit différentiel décrit plus haut délivre un courant qui n'a pas de rôle déterminé dans le fonctionnement de ce circuit, il peut avantageusement être utilisé comme source de courant constant pour le circuit différentiel T9, T10, ce qui est obtenu en connectant ledit collecteur de T11, premier transistor du susdit circuit différentiel, à l'émetteur du transistor T9 du deuxième circuit de comparaison.

Le transistor T7 a pour but de réduire la tension appliquée à T6, T9 et T18, quand la technologie utilisée permet seulement d'appliquer de faibles tensions aux transistors. On utilise le pont R6-R9 déjà présent, pour alimenter la base de T7.

Pour améliorer la stabilité de la source de tension de référence 1, la résistance R18 est branchée à la borne de sortie Vo, dont la tension est stabilisée.

Pour aider le démarrage du circuit lors de la mise sous tension Vi, le transistor T8 monté en diode fournit un courant à la connexion de référence de tension; lorsque celle-ci a atteint sa tension normale, la diode T8 est bloquée. Là encore on utilise le pont R6-R9 pour alimenter la diode T8.

L'ensemble R12, T13 monté en diode, R13 définit un courant; l'ensemble T13, R13, T14, R14 est un miroir de courant qui constitue une source de courant pour alimenter les émetteurs, reliés ensemble, des transistors T16, T17; l'ensemble T13, R13, T15, R15 est un autre miroir de courant qui constitue une source de courant pour alimenter l'émetteur du transistor T11 et la résistance R11.

Certaines dispositions de ce circuit peuvent être remplacées par d'autres sans sortir du cadre de l'invention. Par exemple le pont R19-R21 pourrait ne comporter que les résistances R20-R21, la base de T12 étant reliée directement à la connexion de référence. On pourrait aussi remplacer les résistances R8, R9 par un générateur de courant, constitué par un miroir de courant lié à T13, R13. Alors ce qu'on a appelé plus haut «rapport de division du pont» serait égal à un, et les résistances R4 et R10 devraient avoir la même valeur. On pourrait aussi, bien entendu, remplacer tous les transistors NPN par des transistors PNP, dans le cas où Vi et Vo seraient des tensions négatives par rapport à la masse.

## Revendications

1. Circuit régulateur de tension réalisable au moyen de transistors d'une seule polarité et de résistances, comprenant:

une source de tension de référence (1) plus faible que la tension à fournir, connectée à une borne commune (0),

un élément ballast (T4) qui est inséré entre une borne d'entrée (Vi) et une borne de sortie (Vo), cet élément étant commandé par

un premier circuit de comparaison (T16, T17) entre la tension de référence et une tension qui est fonction de la tension sur la borne de sortie, caractérisé en ce qu'il comporte en outre:

un pont de résistances (R19, R20, R21) disposé entre la source de tension de référence et la borne commune

un circuit différentiel (T11, T12) dont un premier transistor (T11) a sa base reliée à une extrémité d'une des résistances (R20) dudit pont et son émetteur relié à une première source de courant (T15), et dont un deuxième transistor (T12) a sa base reliée à l'autre extrémité de la susdite résistance (R20) dudit pont et son émetteur relié par une résistance (R11) à celui du premier transistor, et en ce que le collecteur du deuxième transistor (T12) est relié par une résistance à la borne de sortie et fournit la susdite tension qui dépend de la tension sur la borne de sortie.

2. Circuit régulateur de tension selon la revendication 1, caractérisé en ce qu'il comporte un deuxième circuit de comparaison (T9, T10) entre une fraction de la tension d'entrée et la tension de référence, ce deuxième circuit de comparaison étant relié à l'élément ballast (T4, R') pour lui fournir un courant qui est fonction de la tension sur la borne d'entrée.

3. Circuit régulateur selon la revendication 2, caractérisé en ce que le collecteur du premier transistor (T11) du susdit circuit différentiel est relié au deuxième circuit de comparaison (T9, T10) pour l'alimenter en courant constant.

## Claims

1. A voltage regulating circuit which can be constructed by means of transistors of a single conductivity type and resistors, comprising:

a reference-voltage source (1) whose voltage is smaller than the voltage to be supplied, connected to a common terminal (0),

a load element (T4) which is arranged between an input terminal (Vi) and an output terminal (Vo), which element is controlled by

a first comparator circuit d(T16, T17) for comparing the reference voltage and a voltage which is a function of the voltage on the output terminal, characterized in that ti also comprises:

a resistor bridge (R19, R20, R21) arranged between the reference-voltage source and the common terminal

a differential circuit (T11, T12) comprising a first transistor (T11) having its base connected to one end of one of the resistors (R20) of said bridge and having its emitter connected to a first current source (T15) and comprising a second transistor (T12) having its base connected to the other end of said resistor (R20) of said bridge and having its emitter connected to that of said first transistor by a resistor (R11), and in that the collector of the second transistor (T12) is connected to the output terminal by a resistor to supply said voltage which depends on the voltage on the output terminal.

2. A voltage regulating circuit as claimed in Claim 1, characterized in that it comprises a second comparator circuit (T9, T10) for comparing a fraction of the input voltage with the reference voltage, which second comparator circuit supplies a current which is a function of the voltage on the input terminal to the load element (T4, R').

3. A voltage regulating circuit as claimed in Claim 2, characterized in that the collector of the first transistor (T11) of said differential circuit is connected to the second comparator circuit (T9, T10) for supplying a constant current to said comparator circuit.

**Patentansprüche**

1. Spannungsregelschaltung, verwirklichbar mit Hilfe von Transistoren einer einzigen Polarität und von Widerständen, mit

einer an eine gemeinsame Klemme (0) angeschlossenen Bezugsspannungsquelle (1), deren Spannung schwächer ist als die Speisespannung,

einem Ballastelement (T4) zwischen einer Eingangsklemme (Vi) und einer Ausgangsklemme (Vo), das gesteuert wird von

einer ersten Komparatorschaltung (T16, T17) zum Vergleichen zwischen der Bezugsspannung und einer von der Spannung an der Ausgangsklemme abhängigen Spannung, dadurch gekennzeichnet, daß sie weiter enthält

eine Widerstandsbrücke (R19, R20, R21) zwischen der Bezugsspannungsquelle und der gemeinsamen Klemme,

eine Differentialschaltung (T11, T12), wobei die Basis eines ersten Transistors (T11) an ein Ende eines der Widerstände (R20) der Brücke und sein Emitter an eine erste Stromquelle (T15) angeschlossen sind, und die Basis eines zweiten Transistors (T12) an das andere Ende des Widerstandes (R20) der Brücke und sein Emitter über einen Widerstand (R11) an den des ersten Transistors angeschlossen sind, und daß der Kollektor des zweiten Transistors (T12) über einen Widerstand an die Ausgangsklemme angeschlossen ist und die genannte von der Spannung an der Ausgangsklemme abhängige Spannung liefert.

2. Spannungsregelschaltung nach Anspruch 1, dadurch gekennzeichnet, daß darin eine zweite Komparatorschaltung (T9, T10) zum Vergleichen zwischen einem Bruchteil der Eingangsspannung und der Bezugsspannung vorgesehen ist, wobei diese zweite Komparatorschaltung an das Ballastelement (T4, R') angeschlossen ist, um es mit einem von der Spannung an der Eingangsklemme abhängigen Strom zu beliefern.

3. Spannungsregelschaltung nach Anspruch 2, dadurch gekennzeichnet, daß der Kollektor der ersten Transistors (T11) der Differentialschaltung an die zweite Komparatorschaltung (T9, T10) zur Lieferung eines Konstantstroms angeschlossen ist.